# EUROPEAN PATENT SPECIFICATION

(11) **EP 4 257 946 B1**
(45) Date of publication and mention of the grant of the patent: **01.04.2026**
(21) Application number: 22187475.3
(22) Date of filing: 28.07.2022
(51) Int. Cl.: G01M 3/32, E03D 9/00

(54) **A TOILET SEAT CONNECTION AIR-TIGHTNESS DETECTION TOOL**
EIN WERKZEUG ZUR FESTSTELLUNG DER LUFTDICHTHEIT DER TOILETTENSITZVERBINDUNG
UN OUTIL DE DÉTECTION DE L'ÉTANCHÉITÉ DE LA CONNEXION D'UN SIÈGE DE TOILETTE

(30) Priority: 09.04.2022 CN 202220842347 U
(43) Date of publication of application: 11.10.2023
(73) Proprietor: Geberit International AG, 8645 Jona (CH)
(72) Inventor: Qian, Weian, Shanghai, 201802 (CN); YOU, Hang, Shanghai, 201802 (CN); Yang, Liang, Shanghai, 201802 (CN); YUAN, Yihui, Shanghai, 201802 (CN); YAO, Jun, Shanghai, 201802 (CN)
(74) Representative: Szynka Smorodin Patentanwälte Partnerschaft mbB

(56) References cited:
- CN-B- 110 470 437

## Description

### Technical field

The invention relates to a tool, in particular a toilet seat connection air-tightness detection tool, for detecting an air-tightness of a toilet seat.

### Background technology

With the more and more extensive use of intelligent toilet, the internal structure of toilet seat is becoming more and more complex. The toilet seat of intelligent toilet is made of thermoplastic resin and contains wires. After injection molding, the internal parts of the seat are installed, and then are fixed on the tool of the connection machine, e. g. a welding machine for welding so as to connect both parts into an integrated part and obtain a product without fitting clearance/gap (i.e. seamless seat). For the above welding, vibration welding is preferred. Vibration welding, also known as friction welding, refers to the method of using the friction heat generated by the friction between thermoplastic plastics to heat and melt the friction surfaces, and then connecting them after pressurizing and cooling. At present, after welding, there is no suitable equipment to fix and test the welding quality of toilet seat, especially in the case of internal wire interference, which also has a certain impact on the air-tightness of welding.

Prior art document CN 110 470 437 B discloses a tool for detection of a toilet pipeline leakage using a pneumatic device having a frame and at least two horizontal sealing plates.

### Description of the invention

The invention provides an air-tightness detection tool, which solves the problem that the connection quality cannot be determined in the prior art, and the air-tightness detection is interfered by wires contained in the seat.

To this end, the invention provides a toilet seat connection air-tightness detection tool according to claim 1. The tool comprises a support tool and an air-tight connecting device; the support tool is used for supporting the toilet seat; the air-tight connecting device is used for connecting a toilet seat and an air-tightness detecting instrument. Further, the support tool comprises a first support, a second support and a support plate; the first support and the second support are symmetrically arranged on both sides above the support plate with the center line of the support plate as the axis; preferably the first support comprises an L-shaped lug and a first seat body part; preferably the L-shaped lug is arranged above the first seat body part, and the opening direction of the symmetrically arranged L-shaped lug faces the inner side of the support plate; preferably the second support comprises an I-shaped lug and a second seat body part; preferably the I-shaped lug is arranged above the second seat body part, and the opening direction of the symmetrically arranged I-shaped lug faces the inner side of the support plate.

According to the invention, the support tool also comprises a third support, and the third support is arranged on the support plate; the third support is located between the first support and the second support symmetrically arranged, forming an annular distribution with the first support and the second support.

Preferably, the third support comprises a U-shaped lug and a third seat body part, the U-shaped lug is arranged above the third seat body part, and the U-shaped opening faces the inner side of the support plate.

According to the invention, the air-tight connecting device comprises an upper air-tight part and a lower air-tight part; the upper air-tight part and the lower air-tight part are semi-closed hollow cavities; the upper air-tight part and the lower air-tight part are combined up and down to form a fully-closed hollow cavity.

Further preferred embodiments can be found in the following description, which refer to the connection air-tightness detection tool, to the use of the connection air-tightness detection tool for detecting air-tightness of a toilet seat and to a corresponding method for detecting the air-tightness of the toilet seat.

Preferably, the upper air-tight part and the lower air-tight part are cuboids, and the upper air-tight part comprises a first surrounding edge, a second surrounding edge, a third surrounding edge and a fourth surrounding edge; the lower airtight part comprises a fifth surrounding edge, a sixth surrounding edge, a seventh surrounding edge and an eighth surrounding edge; a half through hole is respectively opened at the joint of the second surrounding edge and the sixth surrounding edge to form a complete first through hole after being combined into the air-tight connecting device; the outer surface of the fifth surrounding edge is provided with an outward extending air channel, and the air channel is a hollow structure.

Preferably, the joint between the upper air-tight part and the lower air-tight part is provided with a rubber layer.

The beneficial effect of this scheme is that: the first through hole of the air-tight connecting device is airtight connected with the toilet seat wire, and then the air-tight connecting device is connected with the external air-tightness test instrument for completing the air-tightness test of the toilet seat.

The invention can be applied to a fixing of the internal seat parts by any connection technology. Technologies using a flowable connection material are preferred. This may relate to making the material of the parts to be connected flowable such as by welding, in particular vibration welding, but also a dedicated connection material can be applied. In the latter case, a connection material being flowable when applied or also a connection material being made flowable by pressing, vibration or (otherwise) melting or softening can be preferred. Preferred examples are gluing and welding, in particular vibration welding.

### Description of the attached drawings

By reading and referring to the detailed description of the non-restrictive embodiments in the attached drawings, other features, purposes and advantages of the invention will become more distinct:
Figure 1 is the perspective view of the toilet seat of the embodiment;
Figure 2 is the perspective view 1 of the support tool and the toilet seat of the embodiment;
Figure 3 is the perspective view 2 of the support tool and the toilet seat of the embodiment;
Figure 4 is the perspective view 3 of the support tool and the toilet seat of the embodiment;
Figure 5 is the top view of the support tool and the toilet seat of the embodiment;
Figure 6 is the partial enlarged view of B-B;
Figure 7 is a schematic diagram of the operation steps of the embodiment;

Description of reference signs: 1 Support tool; 11. First support; 111. L-shaped lug; 112. First seat body part; 12. Second support; 121. I-shaped lug; 122. Second seat body part; 13. Third support; 131. U-shaped lug; 132. Third seat body part; 14. Support plate; 2. Air-tight connecting device; 21. Upper air-tight part; 211. First surrounding edge; 212. Second surrounding edge; 213. Third surrounding edge; 214. Fourth surrounding edge; 22. Lower air-tight part; 221. Fifth surrounding edge; 222. Sixth surrounding edge; 223. Seventh surrounding edge; 224. Eighth surrounding edge; 3. First through hole; 4. Air channel; 5. Rubber layer; 6. Toilet seat; 61. Seat wire; 62. Upper part of seat ring; 63. Seat pad.

### Specific embodiment

The invention is further described in detail below with reference to the attached drawings.

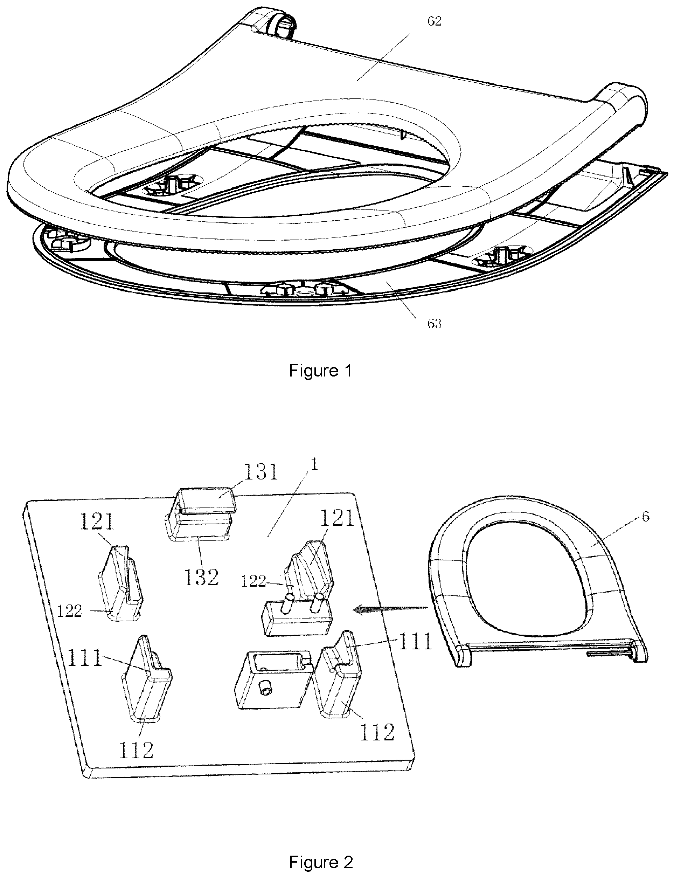

As shown in Figure 1, the toilet seat 6 of the invention comprises a upper part of seat ring 62 and a seat pad 63. The upper part of seat ring 62 and the seat pad 63 are both made of thermoplastic resin. After being obtained by injection molding, the inner parts of the seat are installed therein; then, they are fixed on the tool of the welding machine for welding so as to connect both parts into an integrated part and obtain a product without fitting clearance/gap (i. e. seamless seat). At the hinge at one end of the rear end of the toilet seat 6, the seat wire 61 extends out. For the above welding, vibration welding is a preferred method. Vibration welding, also known as friction welding, refers to the method of using the friction heat generated by the friction between thermoplastic plastics to heat and melt the friction surfaces, and then connecting them after pressurizing and cooling. Of course, the tool of the invention can also be applied to other welding methods of the toilet seat 6.

The welding air-tightness test instrument described herein can be a variety of instruments involved in the prior art that can be used to test the air-tightness, and the specific structure will not be described herein.

As shown in Figure 2-3, the invention provides a toilet seat welding air-tightness detection tool, which comprises a support tool 1 and an air-tight connecting device 2; the support tool 1 is used for supporting the toilet seat 6; the air-tight connecting device 2 is used for connecting the toilet seat 6 and the air-tightness detecting instrument. For the existing friction welded seat, it is impossible to effectively detect the welding quality. The conventional slicing detection method will damage the seat and bring detection costs to the production and manufacturing. However, for this invention, the welded toilet seat 6 is placed on the support tool 1, which can detect the welding quality of the seat in a nondestructive way.

As shown in Figure 2, further, the support tool 1 comprises a first support 11, a second support 12 and a support plate 14; the first support 11 and the second support 12 are symmetrically arranged on both sides above the support plate 14 with the center line of the support plate 14 as the axis; the first support 11 comprises an L-shaped lug 111 and a first seat body part 112; the L-shaped lug 111 is arranged above the first seat body part 112, and the opening direction of the symmetrically arranged L-shaped lug 111 faces the inner side of the support plate 14; the second support 12 comprises an I-shaped lug 121 and a second seat body part 122; the I-shaped lug 121 is arranged above the second seat body part 122. In this embodiment, the number of the first support and the second support are both two. The first support 11 is located near the boundary above the support plate 14 and close to the tail of the toilet seat 6; the hinge part of the toilet seat 6 can be placed on the middle concave part formed by the L-shaped lug 111 and the first seat body part 112, and the L-shaped lug 111 can withstand the outer contour of the hinge part of the toilet seat 6 without further displacement to the rear or left and right, so as to improve the stability of air-tightness detection. The second support 12 is located at the middle part of the support plate 14 and near the boundary of the support plate for supporting the middle part of the toilet seat 6; the toilet seat 6 is placed in the concave part formed by the I-shaped lug 121 and the second seat body part 122, and the I-shaped lug 121 is used to restrict the left and right lateral displacement of the toilet seat 6. The lugs of the first support 11 and the second support 12 have a good effect on preventing the displacement of the toilet seat 6, and can provide a stable air-tightness test of the toilet seat 6.

Further, the support tool 1 also comprises a third support 13, and the third support 13 is arranged on the support plate 14; the third support 13 is located between the first support 11 and the second support 12 symmetrically arranged, forming an annular distribution with the first support 11 and the second support 12. The third support 13 is arranged in the middle part of the support plate 14, close to the head of the toilet seat 6, and the position design of the annular support can better fit the shape of the toilet seat 6; it is helpful to keep a stable state during air-tightness test. Further, the third support 13 comprises a U-shaped lug 131 and a third seat body part 132, the U-shaped lug 131 is arranged above the third seat body part 132, and the U-shaped opening faces the inner side of the support plate 14. When fixing the toilet seat 6, the front end of the toilet seat 6 can be inserted into the opening of the U-shaped lug 131. The U-shaped lug 131 can better clamp the front end of the toilet seat 6, further preventing the front and rear displacement of the toilet seat 6, and achieving better air-tightness test results.

Further, the air-tight connecting device 2 comprises an upper air-tight part 21 and a lower air-tight part 22; the upper air-tight part 21 and the lower air-tight part 22 are semi-closed hollow cavities; the upper air-tight part 21 and the lower air-tight part 22 are combined up and down to form a fully-closed hollow cavity. In this embodiment, the air-tight connecting device 2 adopts a hollow cuboid, which is up and down combined by the upper air-tight part 21 and the lower air-tight part 22. When the upper part of the air-tight connecting device 2 is moved down and pressed tightly with the lower air-tight part 22, a closed cavity will be formed after contacting and pressing between the upper air-tight part 21 and the lower air-tight part 22.

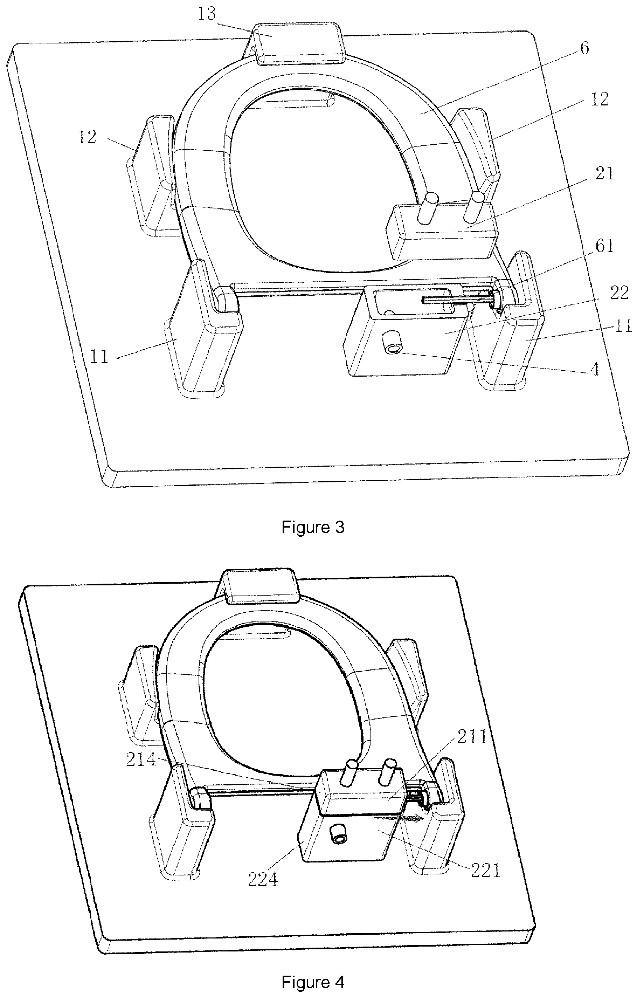

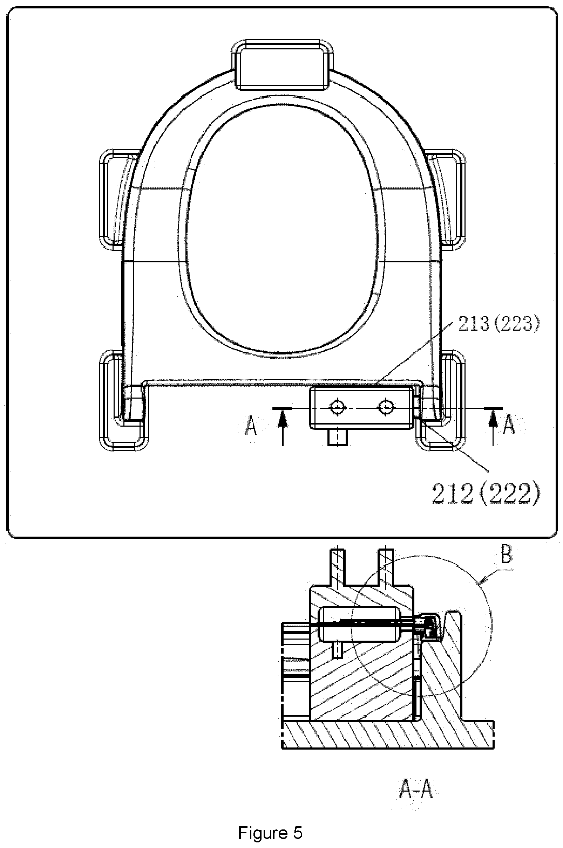

As shown in Figures 4, 5 and 6, further, the upper air-tight part 21 and the lower air-tight part 22 are cuboids, and the upper air-tight part 21 comprises a first surrounding edge 211, a second surrounding edge 212, a third surrounding edge 213 and a fourth surrounding edge 214; the lower airtight part comprises a fifth surrounding edge 221, a sixth surrounding edge 222, a seventh surrounding edge 223 and an eighth surrounding edge 224; a half through hole is respectively opened at the joint of the second surrounding edge 212 and the sixth surrounding edge 222 to form a complete first through hole 3 after being combined into the air-tight connecting device; the outer surface of the fifth surrounding edge 221 is provided with an outward extending air channel 4, and the air channel is a hollow structure used for connecting an external air-tightness test instrument. The first through hole 3 formed by the combination of the upper air-tight part 21 and the lower air-tight part 22 is used to insert the seat wire 61, which can better coordinate with the toilet seat 6 for air-tightness test. The lower air-tight part 22 is also provided with an air channel 4 for connecting an air-tightness test instrument.

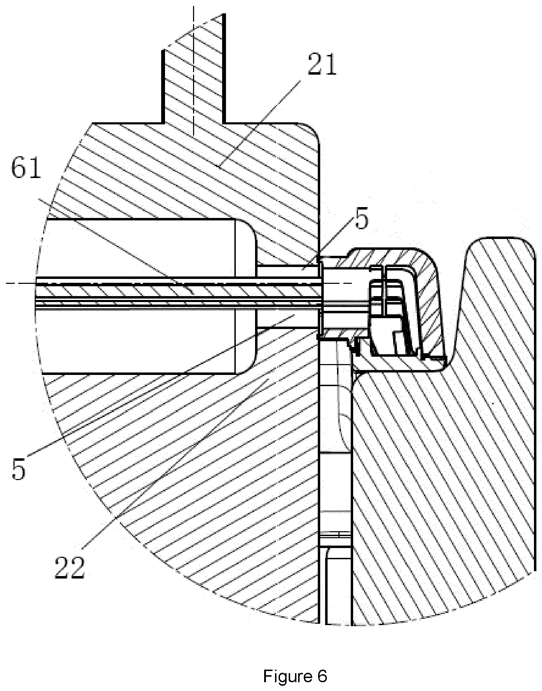

As shown in Figure 6, further, the joint between the upper air-tight part 21 and the lower air-tight part 22 is provided with a rubber layer 5. The rubber layer 5 can provide better air-tightness after the upper air-tight part 21 and the lower air-tight part 22 are combined.

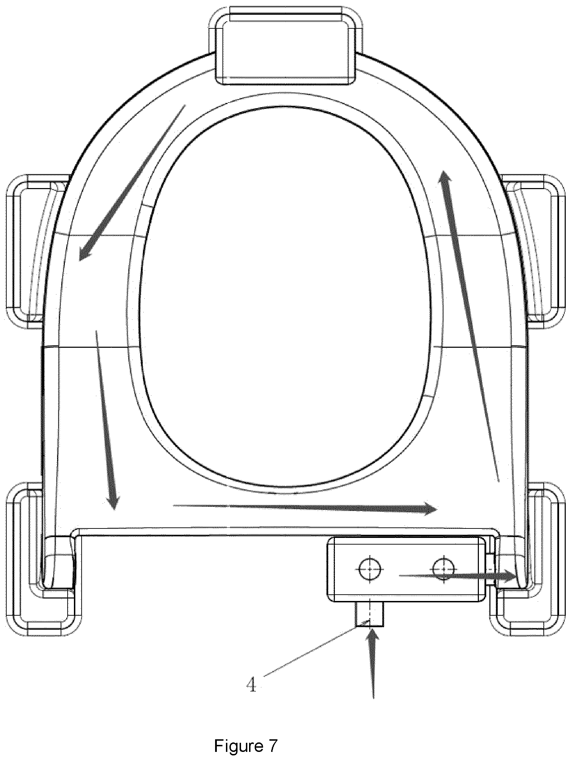

As shown in Figure 7, when using this tool to test the air-tightness of the toilet seat 6, the specific process is: put the welded toilet seat 6 into the support tool 1, place the seat wire 61 in the through hole on the second surrounding edge of the lower air-tight part, make the shell part of the toilet seat closely fit the first through hole side of the lower air-tight part, then cover the upper air-tight part, assemble the air-tight connecting device and press it to form a closed cavity, shift the air-tight connecting device to the right to press it with the seat hinge end face seal to realize the end face seal; connect the air channel 4 to the gas path of the welding air-tightness test instrument, hold the pressure and check the pressure reading device in the test instrument, judge the air-tightness of the seat according to the pressure rise and fall so as to test the welding quality.

Those skilled in the art, upon considering the instructions and practicing the invention disclosed herein, may readily conceive of other implementation schemes of the invention. The application is intended to cover any variation, purpose or adaptive change of the invention, which follows the general principles of the invention and includes the common general knowledge or frequently used technical means in the technical field that are not disclosed in the disclosure. The instructions and embodiments are regarded as exemplary only, and the scope of the invention is indicated by the following claims.

It should be appreciated that the invention is not limited to the precise structure described above and shown in the drawings, and various modifications and alterations can be made without departing from its scope as defined by the claims.

## Claims

1. A toilet seat connection air-tightness detection tool, comprising a support tool (1) and an air-tight connecting device (2),
- the support tool (1) being used for supporting the toilet seat (6), the support tool (1) comprising:
- a first support (11),
- a second support (12),
- a support plate (14), wherein the first support (11) and the second support (12) are symmetrically arranged on both sides above the support plate (14) with a center line of the support plate (14) as axis, and
- a third support (13), wherein the third support (13)
- is arranged on the support plate (14),
- is located between the symmetrically arranged first support (11) and the second support (12),
- forms an annular distribution with the first support (11) and the second support (12); and
- the air-tight connecting device (2) being used for connecting the toilet seat (6) and an air-tightness detecting instrument, the air-tight connecting device (2) comprising:
- an upper air-tight part (21) and
- a lower air-tight part (22),
- wherein the upper air-tight part (21) and the lower air-tight part (22) are
- semi-closed hollow cavities,
- combined up and down to form a fully-closed hollow cavity.

2. A toilet seat connection air-tightness detection tool according to claim 1, the first support (11) comprising an L-shaped lug (111) and a first seat body part (112); the L-shaped lug (111) being arranged above the first seat body part (112), and the opening direction of the symmetrically arranged L-shaped lug (111) facing the inner side of the support plate (14); the second support (12) comprising an I-shaped lug (121) and a second seat body part (122); the I-shaped lug (121) being arranged above the second seat body part (122), and the opening direction of the symmetrically arranged I-shaped lug (121) faces the inner side of the support plate (14).

3. A toilet seat connection air-tightness detection tool according to claim 1 or 2, wherein the third support (13) comprises an U-shaped lug (131) and a third seat body part (132), the U-shaped lug (131) being arranged above the third seat body part (132), and the U-shaped opening facing the inner side of the support plate (14).

4. A toilet seat connection air-tightness detection tool according to one of the preceding claims, wherein the upper air-tight part (21) and the lower air-tight part (22) are cuboids, and that the upper air-tight part (21) comprises a first surrounding edge (211), a second surrounding edge (212), a third surrounding edge (213) and a fourth surrounding edge (214); the lower airtight part comprising a fifth surrounding edge (221), a sixth surrounding edge (222), a seventh surrounding edge (223) and an eighth surrounding edge (224); a half through hole being respectively opened at the joint of the second surrounding edge (212) and the sixth surrounding edge (222) to form a complete first through hole (3) after being combined into the air-tight connecting device (2); the outer surface of the fifth surrounding edge (221) being provided with an outward extending air channel (4), and the air channel (4) being a hollow structure.

5. A toilet seat connection air-tightness detection tool according to one of the preceding claims, wherein the joint between the upper air-tight part (21) and the lower air-tight part (22) is provided with a rubber layer (5).

6. A toilet seat connection air-tightness detection tool according to one of the preceding claims, wherein the toilet seat connection air-tightness detection tool is a toilet seat (6) welding air-tightness detection tool.

## Patentansprüche

1. Toilettensitzverbindung-Luftdichtigkeit-Erfassungswerkzeug, umfassend ein Stützwerkzeug (1) und eine luftdichte Verbindvorrichtung (2),
- wobei das Stützwerkzeug (1) zum Stützen des Toilettensitzes (6) verwendet wird, wobei das Stützwerkzeug (1) umfasst:
- eine erste Stütze (11),
- eine zweite Stütze (12),
- eine Stützplatte (14), wobei die erste Stütze (11) und die zweite Stütze (12) symmetrisch auf beiden Seiten über der Stützplatte (14) mit einer Mittellinie der Stützplatte (14) als Achse angeordnet sind, und
- eine dritte Stütze (13), wobei die dritte Stütze (13)
- auf der Stützplatte (14) angeordnet ist,
- zwischen der symmetrisch angeordneten ersten Stütze (11) und der zweiten Stütze (12) angeordnet ist,
- eine ringförmige Verteilung mit der ersten Stütze (11) und der zweiten Stütze (12) bildet; und
- wobei die luftdichte Verbindvorrichtung (2) zum Verbinden des Toilettensitzes (6) und eines Luftdichtigkeit-Erfassungsinstruments verwendet wird, wobei die luftdichte Verbindvorrichtung (2) umfasst:
- einen oberen luftdichten Teil (21) und
- einen unteren luftdichten Teil (22),
- wobei der obere luftdichte Teil (21) und der untere luftdichte Teil (22)
- halbgeschlossene Hohlräume sind,
- nach oben und unten kombiniert sind, um einen vollständig geschlossenen Hohlraum zu bilden.

2. Toilettensitzverbindungs-Luftdichtigkeits-Erfassungswerkzeug nach Anspruch 1, wobei die erste Stütze (11) einen L-förmigen Ansatz (111) und einen ersten Sitzkörperteil (112) umfasst; wobei der L-förmige Ansatz (111) über dem ersten Sitzkörperteil (112) angeordnet ist und die Öffnungsrichtung des symmetrisch angeordneten L-förmigen Ansatzes (111) der Innenseite der Stützplatte (14) zugewandt ist; wobei die zweite Stütze (12) einen I-förmigen Ansatz (121) und einen zweiten Sitzkörperteil (122) umfasst; wobei der I-förmige Ansatz (121) über dem zweiten Sitzkörperteil (122) angeordnet ist und die Öffnungsrichtung des symmetrisch angeordneten I-förmigen Ansatzes (121) der Innenseite der Stützplatte (14) zugewandt ist.

3. Toilettensitzverbindungs-Luftdichtigkeits-Erfassungswerkzeug nach Anspruch 1 oder 2, wobei die dritte Stütze (13) einen U-förmigen Ansatz (131) und einen dritten Sitzkörperteil (132) umfasst, wobei der U-förmige Ansatz (131) über dem dritten Sitzkörperteil (132) angeordnet ist und die U-förmige Öffnung der Innenseite der Stützplatte (14) zugewandt ist.

4. Toilettensitzverbindung-Luftdichtigkeits-Erfassungswerkzeug nach einem der vorhergehenden Ansprüche, wobei der obere luftdichte Teil (21) und der untere luftdichte Teil (22) Quader sind, wobei der obere luftdichte Teil (21) eine erste umgebende Kante (211), eine zweite umgebende Kante (212), eine dritte umgebende Kante (213) und eine vierte umgebende Kante (214) umfasst; wobei der untere luftdichte Teil eine fünfte umgebende Kante (221), eine sechste umgebende Kante (222), eine siebte umgebende Kante (223) und eine achte umgebende Kante (224) umfasst; wobei ein halbes Durchgangsloch jeweils an der Verbindungsstelle der zweiten umgebenden Kante (212) und der sechsten umgebenden Kante (222) geöffnet ist, um ein vollständiges erstes Durchgangsloch (3) zu bilden, nachdem es in die luftdichte Verbindvorrichtung (2) kombiniert wurde; wobei die Außenfläche der fünften umgebenden Kante (221) mit einem sich nach außen erstreckenden Luftkanal (4) versehen ist und der Luftkanal (4) eine hohle Struktur ist.

5. Toilettensitzverbindungs-Luftdichtigkeits-Erfassungswerkzeug nach einem der vorhergehenden Ansprüche, wobei die Verbindungsstelle zwischen dem oberen luftdichten Teil (21) und dem unteren luftdichten Teil (22) mit einer Gummischicht (5) versehen ist.

6. Toilettensitzverbindung-Luftdichtigkeits-Erfassungswerkzeug nach einem der vorhergehenden Ansprüche, wobei das Toilettensitzverbindung-Luftdichtigkeits-Erfassungswerkzeug ein Toilettensitz- (6) Schweißverbindungs-Luftdichtigkeits-Erfassungswerkzeug ist.

## Revendications

1. Outil de détection d'étanchéité à l'air de raccordement de siège de toilette, comprenant un outil de support (1) et un dispositif de raccordement étanche à l'air (2),
- l'outil de support (1) étant utilisé pour supporter le siège de toilette (6), l'outil de support (1) comprenant :
- un premier support (11),
- un deuxième support (12),
- une plaque de support (14), dans lequel le premier support (11) et le deuxième support (12) sont agencés symétriquement des deux côtés au-dessus de la plaque de support (14) avec une ligne centrale de la plaque de support (14) en tant qu'axe, et
- un troisième support (13), dans lequel le troisième support (13)
- est agencé sur la plaque de support (14),
- est situé entre le premier support (11) agencé symétriquement et le deuxième support (12),
- forme une distribution annulaire avec le premier support (11) et le deuxième support (12) ; et
- le dispositif de raccordement étanche à l'air (2) étant utilisé pour raccorder le siège de toilette (6) et un instrument de détection d'étanchéité à l'air, le dispositif de raccordement étanche à l'air (2) comprenant :
- une partie supérieure étanche à l'air (21) et
- une partie inférieure étanche à l'air (22),
- dans lequel la partie supérieure étanche à l'air (21) et la partie inférieure étanche à l'air (22) sont
- des cavités creuses semi-fermées,
- combinées vers le haut et vers le bas pour former une cavité creuse entièrement fermée.

2. Outil de détection d'étanchéité à l'air de raccordement de siège de toilette selon la revendication 1, premier support (11) comprenant une patte en forme de L (111) et une première partie de corps de siège (112) ; la patte en forme de L (111) étant agencée au-dessus de la première partie de corps de siège (112), et la direction d'ouverture de la patte en forme de L (111) agencée symétriquement faisant face au côté interne de la plaque de support (14) ; le deuxième support (12) comprenant une patte en forme de I (121) et une deuxième partie de corps de siège (122) ; la patte en forme de I (121) étant agencée au-dessus de la deuxième partie de corps de siège (122), et la direction d'ouverture de la patte en forme de 1 (121) agencée symétriquement faisant face au côté interne de la plaque de support (14).

3. Outil de détection d'étanchéité à l'air de raccordement de siège de toilette selon la revendication 1 ou 2, dans lequel le troisième support (13) comprend une patte en forme de U (131) et une troisième partie de corps de siège (132), la patte en forme de U (131) étant agencée au-dessus de la troisième partie de corps de siège (132), et l'ouverture en forme de U faisant face au côté interne de la plaque de support (14).

4. Outil de détection d'étanchéité à l'air de raccordement de siège de toilette selon l'une des revendications précédentes, dans lequel la partie supérieure étanche à l'air (21) et la partie inférieure étanche à l'air (22) sont des cuboïdes, et en ce que la partie supérieure étanche à l'air (21) comprend un premier bord périphérique (211), un deuxième bord périphérique (212), un troisième bord périphérique (213) et un quatrième bord périphérique (214) ; la partie inférieure étanche à l'air comprenant un cinquième bord périphérique (221), un sixième bord périphérique (222), un septième bord périphérique (223) et un huitième bord périphérique (224) ; un demi-trou traversant étant respectivement ouvert au niveau de la jonction du deuxième bord périphérique (212) et du sixième bord périphérique (222) pour former un premier trou traversant complet (3) après avoir été combiné dans le dispositif de raccordement étanche à l'air (2) ; la surface externe du cinquième bord périphérique (221) étant pourvue d'un canal d'air (4) s'étendant vers l'extérieur, et le canal d'air (4) étant une structure creuse.

5. Outil de détection d'étanchéité à l'air de raccordement de siège de toilette selon l'une des revendications précédentes, dans lequel la jonction entre la partie supérieure étanche à l'air (21) et la partie inférieure étanche à l'air (22) est pourvue d'une couche de caoutchouc (5).

6. Outil de détection d'étanchéité à l'air de raccordement de siège de toilette selon l'une des revendications précédentes, dans lequel l'outil de détection d'étanchéité à l'air de raccordement de siège de toilette est un outil de détection d'étanchéité à l'air de soudage de siège de toilette (6).
